# EUROPÄISCHE PATENTANMELDUNG

(11) **EP 1 043 209 A2**
(43) Veröffentlichungstag der Anmeldung: **11.10.2000**
(21) Anmeldenummer: 00106622.4
(22) Anmeldetag: 28.03.2000
(51) Int. Cl.: B62D 1/184

(54) **Verriegelungsvorrichtung für eine in Höhe und Neigung einstellbare Kraftfahrzeuglenksäule**

(30) Priorität: 03.04.1999 DE 19915341
(71) Anmelder: Nacam Deutschland GmbH, 49448 Lemförde (DE)
(72) Erfinder: Grams, Kai-Uwe, 49692 Cappeln (DE)

(57) **Zusammenfassung**

Es wird eine Verriegelungsvorrichtung für zwei relativ zueinander verschiebbare Komponenten einer in Höhe und Neigung einstellbaren Kraftfahrzeuglenksäule vorgestellt, wobei eine Komponente an einer ortsfest mit der Karosserie des Kraftfahrzeuges verbundenen Halterung festgelegt und die andere Komponente Bauteile eines die Lenksäule aufnehmenden Lenksäulengehäuses ist, mit mindestens zwei an den zueinander verschiebbaren Komponenten jeweils festgelegten Zahnflächen, die miteinander in Eingriff bringbar sind.

Zur Verhinderung bzw. Beseitigung einer bei derartigen Verriegelungsvorrichtungen möglichen "Kopf auf Kopf"-Stellung der sich gegenüberliegenden Zahnflächen wird vorgeschlagen, daß eine der Zahnflächen 20 und die korrespondierende verschiebbare Komponente 2a durch ein Führungselement 5 verbunden sind, welches durch Führungskurven 3a, 3b, 3c, 3d im Führungselement 5 kleine Relativbewegungen zwischen Zahnfläche 20 und verschiebbarer Komponente 2a erlaubt, wobei die Relativbewegung durch mindestens ein Federbauteil 6 am Führungselement 5 bewirkt wird.

## Beschreibung

Die Erfindung betrifft eine Verriegelungsvorrichtung für zwei relativ zueinander verschiebbare Komponenten einer in Höhe und Neigung einstellbaren Kraftfahrzeuglenksäule, wobei für jede Verstellrichtung der Kraftfahrzeuglenksäule eine Komponente an einer ortsfest mit der Karosserie des Fahrzeuges verbundenen Halterung festgelegt und die andere Komponente Bauteil eines die Lenksäule aufnehmenden Lenksäulengehäuses ist, mit mindestens zwei an den zueinander verschiebbaren Komponenten jeweils festgelegten Zahnflächen, die miteinander in Eingriff bringbar sind.

Verriegelungsvorrichtungen mit den gattungsbildenden Merkmalen werden in der Automobilindustrie sowohl bei Personenkraftfahrzeugen als auch Lastkraftfahrzeugen zur zeitweiligen Festlegung einer Lenksäule eingesetzt, die vom Fahrer vorher in Höhe und Neigung seinen persönlichen Bedürfnissen entsprechend eingestellt worden ist. Die Festlegung des die Lenksäule aufnehmenden Gehäuses mit der karosseriefesten Halterung ist so auszulegen, daß im verriegelten Zustand der Vorrichtung auch im Falle eines Unfalls trotz hoher Angriffskräfte auf die Lenksäule keinerlei Relativbewegungen zwischen Lenksäulengehäuse und Karosserie auftreten, da derartige Bewegungen die Funktionsweise heute üblicherweise eingesetzter Airbag-Insassenschutzsysteme beeinträchtigen würden. Verriegelungsvorrichtungen mit formschlüssigen Elementen, insbesondere mit ineinandergreifenden als Zahnflächen ausgebildeten Zahnleisten bieten eine zuverlässige und kostengünstige Möglichkeit, die notwendigen Haltekräfte bereitzustellen. Die Verwendung von Zahnleistenpaaren bringt allerdings den systembedingten Nachteil mit sich, daß es Stellungen zwischen Lenksäulengehäuse und karosseriefester Halterung gibt, in der die an den jeweiligen Komponenten angeordneten Zahnleisten sich relativ zueinander in einer "Kopf auf Kopf"-Stellung befinden. In dieser speziellen Stellung kann die Verriegelungsvorrichtung zwar unter Umständen durch den Fahrer festgesetzt werden, es besteht jedoch keine wirkliche Arretierung von Lenksäulengehäuse und karosseriefester Halterung zueinander, so daß im Falle eines Unfalls eine Gefährdung des Fahrers durch eine unkontrollierte Relativbewegung zwischen den Lenksäulenkomponenten nicht ausgeschlossen werden kann.

Darüber hinaus können bei Verriegelungsmechanismen mit Zahnsegmenten Winkeltoleranzen auftreten, was ebenfalls bedeutet, daß es Stellungen gibt, in dem eine Verrastung der Zahnflächen nicht möglich ist.

Aufgabe der vorliegenden Erfindung ist es daher, eine Verriegelungsvorrichtung der gattungsgemäßen Art so weiter zu entwickeln, daß auf einfache und kostengünstige Art ein Übereinanderstehen von Zahnköpfen bei den in den Verriegelungsvorrichtungen verwendeten Zahnflächen unter allen Umständen zuverlässig ausgeschlossen wird.

Diese Aufgabe wird erfindungsgemäß dadurch gelöst, daß eine der Zahnflächen und die mit der Zahnfläche verbundene verschiebbare Komponente durch ein Führungselement miteinander verbunden sind, welches durch Führungskurven in besagtem Führungselement kleine Relativbewegungen zwischen der Zahnfläche und der verschiebbaren Komponente erlaubt, wobei die Relativbewegung durch mindestens ein Federbauteil am Führungselement bewirkt wird.

Durch diese erfindungsgemäße Gestaltung wird erreicht, daß im Falle des Übereinanderstehens zweier Zahnflächen eine automatische Verschiebung der an der verschiebbaren Komponente angeordneten Zahnfläche im Rahmen der durch die Führungskurve des Führungselementes vorgegebenen Bewegungsmöglichkeit erfolgt und die "Kopf auf Kopf"-Stellung der Zahnflächen automatisch aufgehoben wird. Nach der Verschiebung können die sich gegenüberliegenden Zahnflächen weiter ineinander rutschen und eine stabile formschlüssige Verbindung miteinander eingehen, so daß eine optimale Verbindung zwischen dem beweglichen Lenksäulengehäuse und der ortsfesten Karosseriehalterung hergestellt ist. Die besondere erfindungsgemäße Gestaltung hat insbesondere den Vorteil, daß die relative Verschiebung der Zahnfläche keinen Einfluß auf die durch den Fahrer vorgenommene Positionierung der mit der beweglichen Komponente des Lenksäulengehäuses verbundenen Lenksäule hat. Bei anderen Verriegelungsmechanismen, bei denen durch geeignete Maßnahmen eine "Kopf auf Kopf"-Stellung sich gegenüberliegender Zahnflächen vermieden wird, ist dies immer mit einer, wenn auch geringfügigen, Bewegung der bereits durch den Fahrer eingestellten Lenksäule während des Verriegelungsvorganges verbunden. Darüber hinaus bietet die Erfindung den Vorteil einer äußerst kompakten, innerhalb der Abmaße bereits bestehender Lenksäulenkonstruktionen vollkommen integrierbaren Bauweise dar.

Besondere Ausgestaltungen des Gegenstandes der Erfindung ergeben sich aus den Merkmalen der Unteransprüche. Eine besonders vorteilhafte Bauweise sieht vor, daß die verschiebbare Komponente an ihrem freien Ende als Bolzen gestaltet ist und daß die Zahnfläche an einem Rastsegment angeordnet ist, in dem der Bolzen in einem Langloch, dessen Längsachse parallel zur Längsachse der Zahnflächen ausgerichtet ist, verschieblich aufgenommen ist. Durch diese Bauweise ist sichergestellt, daß eine exakt parallele Führung bzw. Verschiebung der beweglichen Zahnfläche stattfindet, so daß eventuelle Verkantungen der Zahnflächen nahezu vollständig ausgeschlossen sind, wodurch ebenfalls eine mangelhafte Verriegelungsposition der Zahnflächen herbeigeführt werden könnte.

Darüber hinaus ist es zweckmäßig, die Führungskurven des Führungselementes als gekrümmte Langlöcher auszubilden. Diese Form der Führungskurven stellt in allen Betriebssituationen der Verriegelungsvorrichtung ein sicheres Ineinandergleiten der sich gegenüberliegenden Zahnflächen sicher.

Desweiteren hat es sich als vorteilhaft erwiesen, daß der Halteblock mit mindestens einem Federstift versehen ist, der mit seinen beiden freien Enden in die Führungskurven des Führungselementes eingreift. Der Federstift stellt zusammen mit dem Federbauteil am Führungselement sicher, daß genügend Verschiebekräfte für die geänderte Positionierung der verschieblichen Zahnfläche bei einer bestehenden "Kopf auf Kopf"-Stellung bereitgestellt werden. Darüber hinaus ist die Verwendung eines oder mehrerer Federstifte herstellungstechnisch einfach und preiswert.

Im folgenden wird ein Ausführungsbeispiel des Gegenstandes der Erfindung anhand der beigefügten Zeichnungen näher erläutert. Es zeigt:
- Figur 1: eine perspektivische Darstellung der erfindungsgemäßen Verriegelungsvorrichtung in unverriegeltem Zustand,
- Figur 2: eine Seitenansicht der Verriegelungsvorrichtung aus Figur 1,
- Figur 3: einen Stirnschnitt der Verriegelungsvorrichtung aus Figur 1 entsprechend der Linie A-A aus Figur 2,
- Figur 4: eine Schnittdarstellung entsprechend der Linie B-B aus Figur 3.

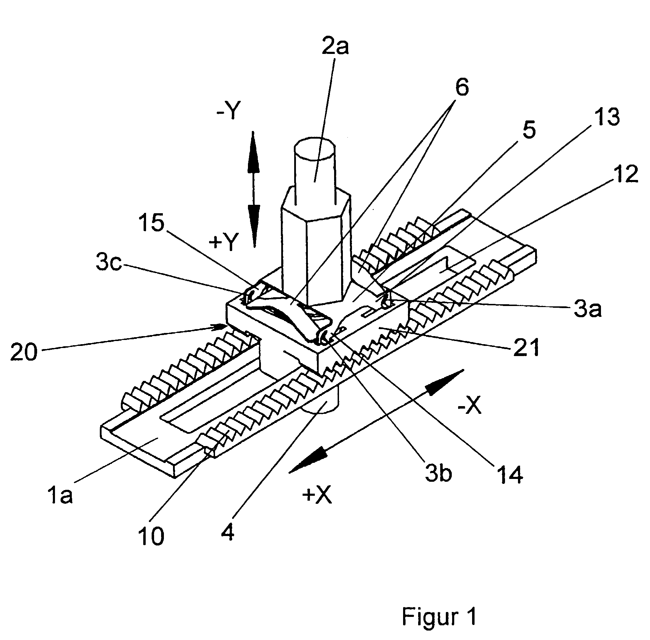

In Figur 1 ist eine Verriegelungsvorrichtung schematisch dargestellt, die sich zur Festlegung einer in Höhe und Neigung einstellbaren Kraftfahrzeuglenksäule zwischen einem beweglichen, hier nicht näher dargestellten Lenksäulengehäuse 2 und einer karosserieseitigen Halterung 1 befindet. Die Verriegelungsvorrichtung weist eine Komponente 1a auf, die an der karosserieseitigen Halterung festgelegt ist und die mit einer Zahnfläche 10 versehen ist, welche aus zwei parallel zueinander beabstandet zueinander angeordneten Zahnreihen besteht. Aus der Figur 1 wird deutlich, daß sich oberhalb der Zahnfläche 10 eine Komponente 2a befindet, welche aus mehreren Einzelbauteilen besteht und mit ihrem oberen Ende am einstellbaren Kraftfahrzeuglenksäulengehäuse festgelegt ist. Die Festlegung erfolgt so, daß eine Beweglichkeit in Richtung der in der Figur 1 dargestellten Pfeile ―Y und +Y gegeben ist. Am unteren, der Zahnfläche 10 zugewandten Ende der Komponente 2a ist eine Zahnfläche 20 angeordnet, die Bestandteil eines Rastsegmentes 21 ist.

Zwischen dem Rastsegment 21 und der Komponente 2a ist ein Führungselement 5 angeordnet.

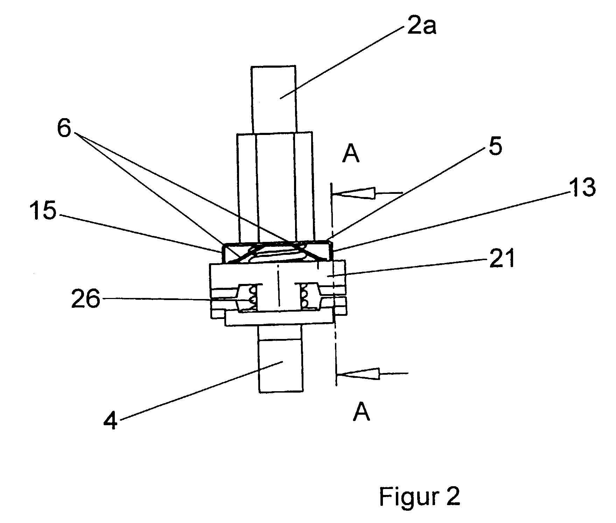

Aus der Figur 2 wird deutlich, daß die Komponente 2a an ihrem unteren, dem Führungselement 5 zugewandten Ende als Bolzen 4 gestaltet ist, der eine Bohrung 9 des Führungselementes 5 durchstößt und so bemessen ist, daß er im zusammengebauten Zustand der Verriegelungsvorrichtung auch eine zwischen den Zahnreihen der Komponente 1a liegende Nut 12 durchgreift, so daß die Komponente 2a mit ihren verbundenen Bauteilen zur Komponente 1a in Richtung der in der Figur 1 dargestellten Pfeile +X und ―X verschiebbar ist. Das Führungselement 5 weist zwei sich gegenüberliegende Federbauteile 6 auf, die jeweils zwei Zungen besitzen, welche nach unten zum Rastsegment 21 abgewinkelt sind und sich auf der Oberfläche von diesem abstützen. Darüber hinaus besitzt das Führungselement 5 vier ebenfalls in Richtung des Rastsegmentes 21 abgewinkelte Zungen 13, 14, 15, 16, die jeweils eine Führungskurve 3a bis 3d als Ausnehmung aufweisen.

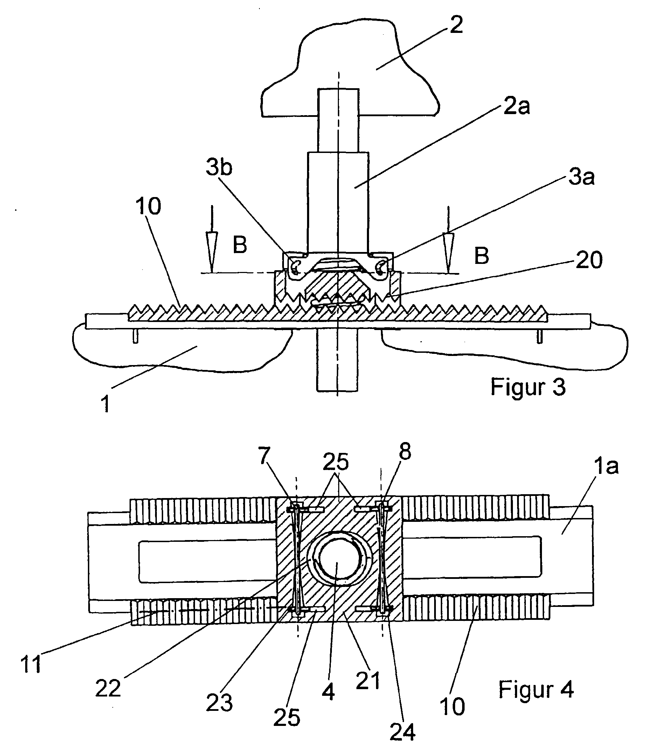

In diese Ausnehmungen 3a bis 3d greifen die freien Enden von zwei Federstiften 7 und 8 ein, die gleichzeitig in quer zur Längsachse 11 der Zahnflächen 10, 20 angeordneten Nuten 23 und 24aufgenommen sind. Die Figur 4 macht deutlich, daß die Nuten von der Oberseite des Rastsegmentes 21 aus betrachtet eine unterschiedliche Breite aufweisen. Die Breite der Nuten 23 und 24 ist so bemessen, daß sie in ihrer Mitte die Federstifte 7 und 8 fest aufnehmen, wohingegen an den Nutenenden deren Breite eine Bewegung der Federstifte in +X- bzw. ―X-Richtung erlaubt.

Gleichzeitig befinden sich in der Oberseite des Rastsegmentes 21 vier weitere Nuten 25, die in ihrer Länge kürzer als die vorher angesprochenen Nuten 23 und 24 ausgeführt sind, die rechtwinkelig zu den Nuten 23 und 24 liegen und zur Aufnahme der oben erwähnten Zungen 13 ― 16 des Führungselementes 5 dienen.

Aus der Figur 4 wird darüber hinaus deutlich, daß sich zentrisch im Rastsegment 21 ein Langloch 22 befindet, durch das der Bolzen 4 der Komponente 2a hindurchgreift. Die Breite des Langloches 22 ist so bemessen, daß eine Spielfreiheit des Bolzens 4 gegeben ist.

Ergänzend sei hier erwähnt, daß die Komponenten 1a und 2a durch eine Schraubenfeder 26 in unverriegeltem Zustand der Verriegelungsvorrichtung so auseinandergedrückt werden, daß ein Ineinandergreifen der sich gegenüberliegenden Zahnflächen nicht mehr gegeben ist und somit eine Verschiebung der Komponenten zueinander in Richtung der Pfeile +X und ―X möglich ist. Eine derartige Verschiebung ermöglicht die Ausrichtung des an der Komponente 2a angeschlossenen Lenksäulengehäuses mit der daran befindlichen Lenksäule entsprechend den Wünschen des Kraftfahrzeugfahrers.

Entsteht nach Einstellung der Lenksäule mit dem Lenksäulengehäuse 2 gegenüber der karosserieseitigen Halterung 1 eine Situation, in der die sich gegenüberliegenden Zahnflächen eine "Kopf auf Kopf"-Stellung einnehmen, so erlaubt die erfindungsgemäße Gestaltung der Verriegelungsvorrichtung eine automatische Verschiebung des Rastsegmentes 21 gegenüber der mit dem Lenksäulengehäuse 2 verbundenen Komponente 2a dergestalt, daß die bestehende "Kopf auf Kopf"-Stellung aufgehoben wird.

Dies geschieht durch das Zusammenwirken der an dem Führungselement vorhandenen Federbauteile 6, der Führungskurven 3a bis 3d sowie der im Rastsegment 21 festgelegten Federstifte 7 und 8.

Der Verriegelungsvorgang wird eingeleitet durch eine Bewegung der Komponente 2a in Richtung des Pfeiles +Y aus Figur 1. Ist eine "Kopf auf Kopf"-Stellung der Zahnflächen zueinander gegeben, so wird dadurch ein Ineinanderrutschen der sich gegenüberliegenden Zahnflächen verhindert und ein korrekter Verriegelungsvorgang ausgeschlossen. Berühren sich die Zahnspitzen der Zahnflächen 10 und 20, so führt ein weiteres Absenken der Komponente 2a in Richtung des Pfeiles +Y zu einer Vorspannung der Federbauteile 6 des Führungselementes 5. Gleichzeitig wandern die freien Enden der Federstifte 7 und 8 in den Führungskurven 3a bis 3d des Führungselementes 5, wobei die Gestaltung der Führungskurven als gekrümmte Langlöcher dazu führt, daß das Rastsegment 21 sich in Richtung des Pfeiles +X verschiebt. Auf diese Weise wird die "Kopf auf Kopf"-Stellung der Zahnflächen 10 und 20 aufgehoben, so daß die Zahnspitzen der Zahnfläche 20 in die Zahnzwischenräume der Zahnfläche 10 hineingleiten können. Dies wird durch die Federwirkung der Federbauteile 6 begünstigt. Wird im Rahmen des Verriegelungsvorganges die Komponente 2a weiter in Richtung des Pfeiles +Y bewegt, müßte das Rastsegment 21 bedingt durch die Führungskurven 3a bis 3d und den darin sich bewegenden Enden der Federstifte 7 und 8 eine Bewegung in Richtung des Pfeiles ―X ausführen. Eine derartige Bewegung ist jedoch durch die ineinandergeglittenen Zahnflächen des Rastsegmentes sowie der Komponente 1a nicht mehr möglich. Um dennoch eine weitere Bewegung und endgültige Verriegelung der Komponente 2a mit der karosserieseitigen Halterung 1 zu gewährleisten, werden sich die Federstifte 7 und 8 in Richtung des Pfeiles ―X innerhalb der Nuten 23 und 24 elastisch verformen. Sind die beiden Zahnflächen 10 und 20 vollkommen in Eingriff, so ist der Verriegelungsvorgang beendet und eine vollkommene kraftschlüssige Verbindung zur Übertragung entsprechender Kräfte ist gewährleistet.

Aus den Zeichnungen wird deutlich, daß sich zur Beseitigung der angesprochenen "Kopf auf Kopf"-Stellung nur das Rastsegment 21 parallel zur Längsachse 11 der Zahnflächen 10 und 20 bewegt, ohne daß eine Veränderung der Lage der Komponente 2a stattfindet. Somit ändert sich auch die Lage des Lenksäulengehäuses und der damit verbundenen Lenksäule aus einer einmal durch den Kraftfahrzeugfahrer gewählten Position heraus nicht mehr.

Ergibt sich bei der Bewegung der Komponente 2a in Richtung des Pfeiles +Y keine direkte "Kopf auf Kopf"-Stellung der Zahnflächen zueinander, so ist aufgrund der erfindungsgemäßen Gestaltung in analoger Weise wie oben beschrieben ein ordnungsgemäßes Ineinandergleiten der Zahnflächen und damit eine sichere Verriegelung der zueinander beweglichen Komponenten der Kraftfahrzeuglenksäule gewährleistet.

### Bezugszeichenliste

- 1: karosserieseitige Halterung
- 1a: Komponente I
- 2a: Komponente II
- 2: Lenksäulengehäuse
- 3a: Führungskurve
- 3b: Führungskurve
- 3c: Führungskurve
- 3d: Führungskurve
- 4: Bolzen
- 5: Führungselement
- 6: Federbauteil
- 7: Federstift
- 8: Federstift
- 9: Bohrung
- 10: Zahnfläche
- 11: Längsachse
- 12: Nut
- 13: Zunge
- 14: Zunge
- 15: Zunge
- 16: Zunge
- 20: Zahnfläche
- 21: Rastsegment
- 22: Langloch
- 23: Nut
- 24: Nut
- 25: Nut

## Patentansprüche

1. Verriegelungsvorrichtung für zwei relativ zueinander verschiebbare Komponenten einer in Höhe und Neigung einstellbaren Kraftfahrzeuglenksäule, wobei eine Komponente an einer ortsfest mit der Karosserie des Kraftfahrzeuges verbundenen Halterung festgelegt und die andere Komponente Bauteil eines die Lenksäule aufnehmenden Lenksäulengehäuses ist, mit mindestens zwei an den zueinander verschiebbaren Komponenten jeweils festgelegten Zahnflächen, die miteinander in Eingriff bringbar sind,
**dadurch gekennzeichnet, daß**
eine der Zahnflächen (20) und die korrespondierende verschiebbare Komponente (2a) durch ein Führungselement (5) verbunden sind, welches durch Führungskurven (3a, 3b, 3c, 3d) im Führungselement (5) kleine Relativbewegungen zwischen Zahnfläche (20) und verschiebbarer Komponente (2a) erlaubt, wobei die Relativbewegung durch mindestens ein Federbauteil (6) am Führungselement (5) bewirkt wird.

2. Verriegelungsvorrichtung nach Anspruch 1,
**dadurch gekennzeichnet, daß**
die verschiebbare Komponente (2a) an ihrem einen freien Ende als Bolzen gestaltet ist und daß die Zahnfläche (20) an einem Rastsegment (21) angeordnet ist, in dem der Bolzen (4) in einem Langloch (22), dessen Längsachse parallel zur Längsachse (11) der Zahnflächen (10, 20) ausgerichtet ist, verschieblich aufgenommen ist.

3. Verriegelungsvorrichtung nach Anspruch 1 oder 2,
**dadurch gekennzeichnet, daß**
die Führungskurven (3a, 3b, 3c, 3d) des Führungselementes (5) als gekrümmte Langlöcher ausgebildet sind.

4. Verriegelungsvorrichtung nach Anspruch 2 oder 3,
**dadurch gekennzeichnet, daß**
das Rastsegment (21) mit mindestens einem Federstift (7) versehen ist, der mit seinen beiden freien Enden in die Führungskurven (3a, 3b, 3c, 3d) des Führungselementes (5) eingreift.
